# EUROPÄISCHE PATENTSCHRIFT

(11) **EP 4 191 044 B1**
(45) Veröffentlichungstag und Bekanntmachung des Hinweises auf die Patenterteilung: **31.12.2025**
(21) Anmeldenummer: 22205757.2
(22) Anmeldetag: 07.11.2022
(51) Int. Cl.: F02D 41/14, F02D 41/40, F02D 41/00, F02D 19/02

(54) **VERFAHREN ZUM BETRIEB EINER VERBRENNUNGSKRAFTMASCHINE MIT EINEM GASFÖRMIGEN KRAFTSTOFF SOWIE VERBRENNUNGSKRAFTMASCHINE**
METHOD FOR OPERATING AN INTERNAL COMBUSTION ENGINE WITH A GASEOUS FUEL AND INTERNAL COMBUSTION ENGINE
PROCÉDÉ DE FONCTIONNEMENT D'UN MOTEUR À COMBUSTION INTERNE DOTÉ D'UN CARBURANT GAZEUX ET MOTEUR À COMBUSTION INTERNE

(30) Priorität: 01.12.2021 CH 0706302021
(43) Veröffentlichungstag der Anmeldung: 07.06.2023
(73) Patentinhaber: Liebherr Machines Bulle SA, 1630 Bulle (CH)
(72) Erfinder: SEBA, Dr. Bouzid, 1632 Riaz (CH); BAERT, Michael-Alexandre, 3280 Murten (CH); SILVESTRINI, Sandro, 6952 Canobbio Ticino (CH); ANDREUTTI, Roberto, 6917 Barbengo (CH)
(74) Vertreter: Lorenz Seidler Gossel Part. mbB

(56) Entgegenhaltungen:
- DE-A1- 102014 209 832
- DE-T5- 112006 001 271
- US-A- 5 408 957
- US-B2- 11 105 278
- US-B2- 7 463 967
- US-B2- 7 661 409

## Beschreibung

Die Erfindung betrifft ein Verfahren zum Betrieb einer Verbrennungskraftmaschine mit mindestens zwei Zylindern und einem System zur Kraftstoff-Einspritzung, bei dem der Kraftstoff aus einem Primärtank entnommen und unter einer gegenüber dem atmosphärischen Druck deutlich verdichteten Form einem als Rail bezeichneten Kraftstoff-Hochdruckspeicher zugeführt wird und mehrere Zylinder den gasförmigen Kraftstoff aus dem gemeinsam genutzten Rail beziehen.

Aufgrund allgemeinhin bekannter Vorteile erfolgt die Kraftstoffzuführung in das Saugrohr bzw. in die Brennräume heutiger Verbrennungskraftmaschinen vielfach unter einem stark bzw. einem extrem stark erhöhten Druck. Sieht das Motorkonzept Selbiges vor, verfügt die Verbrennungskraftmaschine im Allgemeinen ein Rail, welches die Funktion eines Bereithalte-Speichers ausübt. Der innerhalb des Rails gespeicherte Kraftstoffvorrat soll ein definiertes Druckniveau aufweisen. Um dieser Forderung gerecht zu werden, kann der aus dem Primärtank entnommene Kraftstoff entlang seines Zuführungspfades in das Rail mittels einer sogenannten Raildruckpumpe verdichtet werden. Bis zu einem gewissen zylinderbezogenen Hubraumvolumen, welches sich in einer Grössenordnung von etwa 3 Litern befindet, wird zumeist für alle oder mehrere Brennräume der Verbrennungskraftmaschine ein gemeinsames Rail benutzt. Üblicherweise wird eine Raildruckpumpe über einen Nebenabtrieb der Verbrennungskraftmaschine angetrieben, weshalb im Fall niedriger Motordrehzahlen lediglich ein vergleichsweise geringer sogenannter Raildruck (das Druckniveau des im Rail 2 gespeicherten Kraftstoffes) erzeugbar ist. Für heutige Verbrennungskraftmaschinen, die für konventionelle Kraftstoffe bspw. Dieselkraftstoff ausgelegt sind und mit einem sogenannten Common Rail System ausgestattet sind, werden Raildrücke bis oberhalb von 2000 bar erreicht.

Um kurzfristig auf Änderungen der Sollabgabeleistung der Verbrennungskraftmaschine reagieren zu können, wird die Öffnungsdauer des momentan aktiven bzw. unmittelbar nachfolgend zu aktivierenden Injektors entsprechend verlängert bzw. verkürzt. So wird bei einem momentan auftretenden Anstieg der Soll-Abgabeleistung, deren Abdeckung klarerweise eine erhöhte Kraftstoffzuführungsmenge erfordert, die Öffnungsdauer des jeweiligen Injektors, über den die aktuelle Kraftstoffzuführung in den Brennraum bereits erfolgt bzw. unmittelbar erfolgen soll, verlängert. Um eine erhöhte zeitbezogene Kraftstoffzuführungsmenge anhaltend abdecken zu können, muss bekannter Weise auch der Raildruck angehoben werden. Die zeitbezogene Kraftstoffzuführungsmenge steigt bei einer zunehmenden Motordrehzahl und bei einem steigenden Motor-Abgabedrehmoment. So erfolgt bei einem Anstieg der Soll-Abgabeleistung eine Sollwert-Anhebung des Raildruckes, damit in den jeweiligen Zeitfenstern, in denen eine Kraftstoff-Einspritzung möglich ist bzw. innerhalb derer die Kraftstoff-Einspritzung vorzugsweise erfolgen soll, die vorgesehene Kraftstoffzuführungsmenge auch tatsächlich bereitgestellt werden kann, um eine Leistungsabdeckung zu erzielen.

Einerseits verschafft eine Vergrösserung des zeitbezogenen Kraftstoffflusses durch einen geöffneten Injektor eine Erhöhung der Flexibilität zu welchen Zeitabschnitten bzw. zu welchen Kurbelwellenwinkel-Bereichen innerhalb eines jeweiligen Intervalls von 0° bis 360° eine jeweilige Kraftstoff-Einspritzung durch das entsprechende Öffnen und Schliessen des betreffenden Injektors vorgenommen werden kann. Doch andererseits bieten längere Injektor-Öffnungszeiträume eine höhere Kraftstoffmengen-Reproduzierbarkeit bei unter gleichen Betriebsbedingungen erfolgenden Einspritzvorgängen, weil derjenige während des Schliessens und während des Öffnens kumulierte Kraftstoffzufluss einen geringeren Anteil der während eines kompletten Einspritzvorganges in den Brennraum zugeführten Kraftstoffmenge ausmacht. Insgesamt bietet eine Kraftstoff-Hochdruckeinspritzung ein hohes Optimierungspotenzial für das Betreiben einer Verbrennungskraftmaschine.

Für das Kraftstoffbeispiel Diesel fördert die Raildruckpumpe immer eine solche Kraftstoffmenge zum Rail, die zumindest geringfügig grösser als der Kraftstoffmomentanverbrauch der Verbrennungskraftmaschine ist. Sofern der Raildruck seinen Sollwert erreicht oder bereits überschritten hat, wird die überschüssige in das Rail hinzukommende oder sich bereits darin befindende überschüssige Kraftstoffmenge aus dem Rail abgeleitet und dabei in den Primärtank zurückgeführt.

Da sich Flüssigkeiten wesentlich einfacher auf ein Druckniveau von einigen 10 bar bis hin zu vielen hundert bar verdichten lassen als Gase und - wie gemeinhin bekannt - Flüssigkeiten eine deutlich höhere Dichte als Gase aufweisen und ferner die weitverbreiteten Flüssigkraftstoffe (Diesel und Diesel-ähnliche Kraftstoffe, Benzin, LPG etc.) bereits unter gewöhnlichen Umgebungsbedingungen, d.h. einem atmosphärischem oder geringfügig höheren Druck und unter üblichen Umgebungstemperaturen im Primärtank gespeichert werden können, sind die oben genannten Massnahmen im Hinblick einer schnellen Steigerungsmöglichkeit der Kraftstoffzuführungsmenge für jene Kraftstoffe technisch noch vergleichsweise einfach umsetzbar. Klarerweise setzt eine schnelle Zunahme der mechanischen Abgabeleistung einer Verbrennungskraftmaschine auch eine entsprechend hochdynamische Erhöhung der zuzuführenden Luftmenge voraus. Sofern die Anforderung nach einem transienten Leistungsanstieg während einer Ausgangslage erfolgt, in der die momentane Luftzuführung in die Brennräume durch eine Androsselung im Luftpfad und/oder die Zumischung von Abgas begrenzt wird, ist zumindest eine gewisse Steigerung der Luftzufuhr relativ kurzfristig möglich. Ferner sind bestimmte Hilfsmittel allgemein bekannt mit denen die Luftzufuhr vergleichsweise kurzfristig und deutlich gesteigert werden kann, z.B. durch einen im Luftpfad integrierten elektrisch angetriebenen Verdichter.

Bei einer mit einem konventionellen Kraftstoff betriebenen Verbrennungskraftmaschine ist deren Dynamik im Wesentlichen auf die begrenzte Steigerungsrate der Luftzuführung zurückzuführen. Hingegen kann für die Dynamik-Limitierung eines Gasmotors z.B. in der Ausführungsform eines Wasserstoffmotors auch die begrenzte Steigerungsrate der Kraftstoffzuführung ausschlaggebend sein. Anders ausgedrückt: Besteht für einen Gasmotor die Anforderung nach einer hohen Leistungsdynamik, genügt es nicht, lediglich das Augenmerk auf den Luftpfad zu richten, es sei denn, der Kraftstoff wird im Primärtank als Druckgas gespeichert und dessen Entnahme ist lediglich bis zu dem Abfallen auf ein solches Druckniveau vorgesehen, welches noch ausreichend hoch ist, um den vorgesehen Maximalwert des Raildruckes abzudecken. Ansonsten genügt es ab einer bestimmten zu erzielenden Dynamik nicht mehr die alleinige Ausstattung des Luftpfads mit solchen Hilfsmitteln vorzusehen, die eine hohe Steigerungsrate der Luftzufuhr ermöglichen, sondern vielmehr müssen auch im Kraftstoffpfad geeignete Massnahmen getroffen werden, welche eine hohe Steigerungsrate der Kraftstoffzufuhr ermöglichen. Letzteres wird umso dringender, je kleiner die Dichte des gasförmigen Kraftstoffes ist.

Für einen Kraftstoff, der nach seiner Entnahme aus dem Primärtank und vor seinem Einleiten in das Rail lediglich verdichtet wird - wie etwa Dieselkraftstoff, kann im Fall eines starken Absinkens der Soll-Abgabeleistung der hiermit betriebenen Verbrennungskraftmaschine der Raildruck auf eine einfache Weise dadurch abgesenkt werden, indem ein gewisser sich bereits im Rail befindender Kraftstoffanteil in den Primärtank zurückgeleitet wird. Hierzu bedarf es lediglich einer weiteren Kraftstoffleitung die über ein Ventil PCV verfügt, die derart angeordnet ist, dass bei einem geöffneten Ventil PCV ein Kraftstoff-Rückfluss vom Rail in den Primärtank erfolgt. Sofern allerdings ein gasförmiger Kraftstoff im Primärtank nicht in Gasform, sondern bspw. in Flüssigform oder in einer chemischen Bindung gespeichert ist, kann eine sich im Rail befindende überschüssige Kraftstoffmenge gar nicht mehr in den Primärtank zurückgeführt werden bzw. wäre eine Rückführung sehr aufwendig und/oder sehr unzweckmässig.

Beim Auftreten eines hohen und zugleich schnellen Anstiegs der Soll-Abgabeleistung eines Gasmotors ist zumindest vorübergehend das Verlängern der jeweiligen Öffnungszeiträume der Injektoren nur bedingt möglich, da ein «unerwartet» langes Öffnen zu einem deutlichen Abfall des Raildrucks führt. Bevor sich die Vorrichtung zur Kraftstoffzuführung in das Rail auf die erhöhte Kraftstoffmengenanforderung eingestellt hat, stellt das jeweilige Verlängern der Öffnungsdauer eines Injektors eine Kompromisslösung dar. Würde die Öffnungszeit eines Injektors übermässig verlängert werden, um die Kraftstoffmengenanforderung des aktuellen Einspritzvorgangs bereits annähernd oder vollständig zu erfüllen, käme es zu einer starken Raildruck-Abnahme, wodurch für den nachfolgenden bzw. für nachfolgende Einspritzvorgänge die Kraftstoffzuführungsmenge rückläufig werden würde, obgleich diese zur Erfüllung eines geforderten Leistungsanstiegs klarerweise zunehmen müsste.

Sofern der Primärtank des gasförmigen Kraftstoffes als Druckspeicher ausgeführt ist, und der sich darin befindende Gasdruck den Raildruck-Sollwert um ein entsprechendes Mindestmass überschreitet, ist klarerweise eine schnelle Anhebung des Raildruckes einfach möglich. Sind jedoch keine weiteren Hilfsmittel zur Anhebung des Raildruckes vorgesehen, kann bei einem entsprechend hohen Sollwert ein vergleichsweise hoher Anteil des sich im Primärtank befindenden gasförmigen Kraftstoffes nicht genutzt werden.

Sofern der gasförmige Kraftstoff einen sehr niedrigen Siedepunkt aufweist und als Flüssiggas gespeichert ist, erfordert die Konditionierung des Kraftstoffes dessen entsprechend starke Erwärmung. In einem solchen Fall schliesst ein Anstieg des Kraftstoffbedarfes, d.h. eine Steigerung an verdichtetem gasförmigen Kraftstoff und zwar in Bezug auf das benötigte Druckniveau sowie an die Menge die Notwendigkeit einer zeitlich und örtlich abgestimmten Steigerung des Wärmeeintrages in den Kraftstoffzuführungspfad ein. Beispiele solcher Kraftstoffe sind Flüssigwasserstoff und verflüssigtes Erdgas.

Sofern der gasförmige Kraftstoff im Primärtank nicht in seiner Molekularform, sondern chemisch gebunden gespeichert ist, schliesst eine erhöhte Bereitstellung von Kraftstoff in Bezug auf sein Druckniveau und seine Menge sämtliche Prozessschritte längs eines mehrstufigen Konditionierungspfades ein. Wenn es sich bei dem Kraftstoff beispielsweise um Wasserstoff handelt, der im Primärtank in einem flüssigen organischen Wasserstoff-Träger (LOHC = Liquid Organic Hydrogen Carriers) gespeichert ist, muss diese Trägerflüssigkeit zunächst für einen Reformationsprozess konditioniert werden und diesen Reformationsprozess durchlaufen. Der dann in seiner Molekularform verfügbare Wasserstoff liegt dann bereits in Gasform vor und muss dann (nochmals) komprimiert werden, sofern das im Rail benötigte Druckniveau höher ist als das damit korrespondierende Druckniveau unter dem man den flüssigen organischen Wasserstoff-Träger dem Reformationsprozess zuführen kann.

Da Gase bekanntermassen kompressibel sind, weist das Strahlbild einer sich im Gasströmungspfad befindenden Blende eine hohe Druckabhängigkeit des die Blende durchströmenden Gases auf. Demzufolge stellt die Ausgestaltung einer Injektordüse eines Gasinjektors, der für einen grossen Druckbereich einsetzbar ist, eine Kompromisslösung oder lediglich eine partiell gute Auslegung dar. Dies wiederum hat zur Folge, dass das Strahlbild bzw. die Gestaltung der Spritzkanäle eines Gasinjektors, der innerhalb eines weitläufigen Druckbereiches praktikabel nutzbar sein muss, zumindest tendenziell quasi immer ausserhalb seines Optimalbereichs eingesetzt wird oder zumindest, dass zwangsläufig ein hoher Anteil des genutzten Kraftstoffes mit einem weniger günstigen Strahlbild eingespritzt wird.

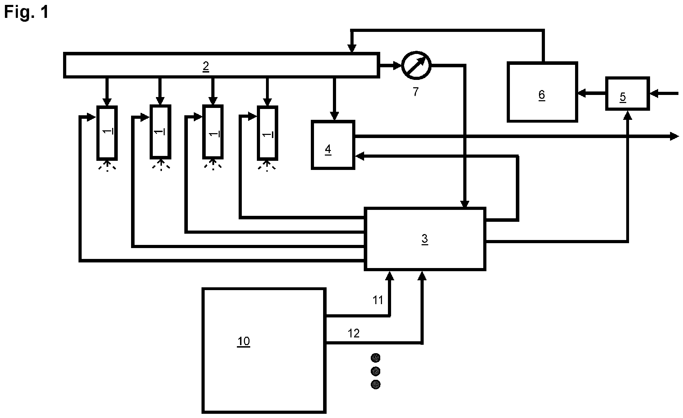

Figur 1 zeigt ein Ausführungsbeispiel eines Common Rail Systems gemäss dem Stand der Technik. Die Kraftstoffzuführung in die Brennräume (nicht dargestellt) erfolgt über bzw. während koordinierter Öffnungszeiträume der Injektoren 1, die den Kraftstoff aus einem gemeinsam genutzten Rail 2 beziehen. Diese Koordination wird über eine Steuerungseinheit, die wie in den meisten Anwendungen Ausführungsbeispiel Bestandteil der Motorsteuerung 3 ist, in Abhängigkeit bestimmter Betriebsgrössen (bspw. der Momentandrehzahl, dem Momentan-Drehmoment etc.), bestimmter Zielgrössen (bspw. der Solldrehzahl etc.) und bestimmter Kennfelder, die in der Motorsteuerung 3 als Parameter hinterlegt sind, vollzogen. Die Kraftstoff-Einspritzmenge eines Einspritzvorganges wird über den Raildruck und der Öffnungsdauer des Injektors 1 in definierter Weise beeinflusst. Obgleich zur Vorbereitung eines Verbrennungsvorgangs rein physikalisch eine Kraftstoff-Einspritzung während der gesamten Kompressionsphase eines Zylinders möglich wäre, verbleiben Zeiträume innerhalb der Kompressionsphase, in denen der betreffende Injektor 1 geschlossen ist und das auch, wenn der maximale Kraftstoffbedarf vorliegt. Die nachfolgenden Betrachtungen beschränken sich auf die Haupteinspritzung.

Damit im unteren Teillastbetrieb die tatsächliche Kraftstoffzumessung möglichst gut mit ihrem Sollwert übereinstimmt, liegt ein vergleichsweise niedriger Raildruck-Sollwert vor. Damit im oberen Lastbereich eine ausreichend hohe Kraftstoffzuführung realisierbar ist, liegt ein deutlich höherer Raildruck-Sollwert vor. Extrem hohe Raildrücke weit oberhalb von 1000 bar bieten unter anderem den Vorteil, dass selbst bei vorliegender Maximalleistung der Verbrennungskraftmaschine die Kraftstoff-Einspritzung innerhalb eines kleinen Zeitfensters während der Kompressionsphase erfolgen kann, was wiederum eine hohe Flexibilität und damit ein Optimierungspotenzial für die Auswahl eines Kurbelwellen-Phasenwinkel-Bereiches, in dem die Kraftstoff-Einspritzung erfolgen soll bzw. darüber hinausgehend die Option bietet, dass sich innerhalb einer einzigen Kompressionsphase eines Zylinders die Kraftstoffzufuhr für den betreffenden Brennraum in mehrere Einspritzvorgänge unterteilt werden kann.

Eine Raildruck-Regelung kann besonders vorteilhaft gemäss der Figur 1 über die Ansteuerung von zwei entsprechend ihrer Funktion angeordneten Ventilen 4, 5 erfolgen. In Abhängigkeit bestimmter Betriebsgrössen und Parameter ermittelt die Motorsteuerung 3 einen Sollwert-Raildruck und vergleicht diesen mit dem Raildruck-Istwert, was zu einer entsprechenden Betätigung des Druckregelventils 4 (PCV) führt. Gleichzeitig bestimmt die Motorsteuerung die Betätigung des Volumenstrom-Regelventils 5 (VCV), welches in Bezug auf den Kraftstoffpfad vor der Kraftstoff-Verdichtung angeordnet ist. Sofern der Raildruck-Istwert deutlich unterhalb seines Sollwertes liegt und/oder ein hoher Kraftstoffbedarf vorliegt, befindet sich das Volumenstrom-Regelventil 5 tendenziell in einer weit geöffneten Position. Sofern der Raildruck-Istwert den Sollwert deutlich überschreitet, befindet sich das Volumenstrom-Regelventil VCV 5 in Sperrstellung oder lässt nur noch einen solchen Kraftstoff-Volumenstrom passieren, des für die Eigenschmierung des zur Kraftstoff-Verdichtung dienenden Subsystems, insbesondere der Raildruckpumpe 6 benötigt wird. Kommt es zu einem schnellen Rückgang der von der Verbrennungskraftmaschine angeforderten Abgabeleistung, weil bspw. ein Beschleunigungsvorgang abgeschlossen ist oder sich das Lastdrehmoment aufgrund eines abgeschlossenen Arbeitsvorgangs stark verkleinert, dann erfolgt eine deutliche Reduzierung des Raildruck-Sollwertes. In einem solchen Fall muss eine vergleichsweise grosse Kraftstoffmenge aus dem Rail 2 abgeleitet werden. Wie bereits erwähnt, können bestimmte Flüssigkraftstoffe, wie bspw. Dieselkraftstoff, ein Diesel-ähnlicher Kraftstoff oder Benzin etc. zwecks Abbau eines Überdruckes im Rail 2 (der aktuelle Raildruck-Istwert überschreitet den aktuellen Raildruck-Sollwert) jener überschüssige Kraftstoff von dem Rail 2 in den Primärtank (nicht dargestellt) zurückgeleitet werden, wofür einzig und allein eine entsprechende Kraftstoffverbindung, die über das Druckregelventil PCV 4 zwecks einer Raildruck-Reduzierung geöffnet und ansonsten verschlossen ist, erforderlich ist, denn aufgrund des hohen Druckgefälles des sich im Rail 2 befindenden Kraftstoffes gegenüber dem Innendruck im Primärtank, d.h. dem Tank, dem bei einer Betankung des Systems bspw. eines Fahrzeugs der Kraftstoff zugeführt wird, erfolgt dieser Kraftstoff-Rückfluss selbsttätig.

Bei anderen Kraftstoffen wie bspw. einem (i) als Flüssiggas, (ii) unter hohem Druck oder (iii) in einer chemischen Verbindung gespeicherten gasförmigen Kraftstoff, kann eine sich im Rail 2 befindende überschüssige Kraftstoffmenge entweder gar nicht mehr in den Primärtank zurückgeführt werden bzw. wäre eine Rückführung sehr aufwendig und/oder sehr unzweckmässig.

### Zu (i)

Bis zu einem gewissen Entleerungsgrad des als Drucktank ausgeführten Primärtanks müsste für das besagte Zurückleiten eines bestimmten Kraftstoffvorkommens aus dem Rail 2 jenes Kraftstoffvorkommen verdichtet werden. Da dies aber in einer entsprechend kurzen Zeit gar nicht möglich erscheint, wäre wohl das Vorhandensein und die Benutzung eines Pufferspeichers erforderlich.

### Zu (ii)

Vor dem Zurückleiten von Kraftstoff aus dem Rail 2 in einen als Flüssiggastank ausgeführten Primärtank wäre eine Verflüssigung erforderlich, was On-board nicht praktikabel ist. Umsetzbar wäre die Hinzunahme eines als Druckbehälter ausgeführten Puffspeichers, der den aus dem Rail 2 abzuleitenden Kraftstoff aufnehmen kann.

### Zu (iii)

Auch hier wäre die Verfügbarkeit eines als Druckbehälter ausgeführten Pufferspeichers zwingend.

Um dieses Kraftstoffvorkommen, welches aus dem Rail 2 abgeleitet werden muss, und in den Pufferspeicher rekuperiert werden soll, später tatsächlich in der Verbrennungskraftmaschine nutzen zu können, wäre ein weiterer nicht unerheblicher Aufwand erforderlich. (Alternativ könnte man auf eine Rückgewinnung dieses Kraftstoffvorkommens zur späteren Nutzung in der Verbrennungskraftmaschine verzichten, sondern zumindest einen gewissen Anteil dieses Kraftstoffvorkommens anderweitig nutzen, z.B. über eine APU (Auxiliary Power Unit), die bspw. als Brennstoffzelle ausgeführt sein kann, mit der eine Batterie geladen wird.) Sofern der Einsatz eine gewisse Dynamik der von der Verbrennungskraftmaschine zu erbringenden Leistung erfordert und sich diese im Sollwertverlauf des Raildruckes und damit in den aus dem Rail 2 abzuführenden Kraftstoffportionen wiederspiegelt, ergibt sich die Konsequenz, dass man in vielen Anwendungen die Menge des rekuperierbaren Kraftstoffes energetisch nicht sinnvoll verwenden kann.

Es besteht daher der Wunsch nach einer Modifikation der bestehenden Verbrennungskraftmaschine, um die vorgenannten Probleme für den Gasbetrieb, bspw. mit Erdgas oder insbesondere Wasserstoff, zu umgehen und dennoch innerhalb einer kurzen Zeitspanne eine deutliche Steigerung der Kraftstoff-Zuführung zwecks Erzielung einer Dynamikerhöhung zu ermöglichen. Die Dokumente US 5 408 957 A und DE 10 2014 209832 A1 offenbaren entsprechende Lösungen für Zweistoffmotoren, wo eine hohe Dynamik über den Flüssigkraftstoff bereitgestellt wird.

Gelöst wird diese Aufgabe durch ein Verfahren zum Betrieb einer Verbrennungskraftmaschine gemäß den Merkmalen des Anspruch 1. Vorteilhafte Ausführungen des Verfahrens sind Gegenstand der abhängigen Ansprüche.

Das erfindungsgemäße Verfahren ist für den Betrieb einer Verbrennungskraftmaschine gedacht, die ein Rail 2 zur gemeinsamen Versorgung mehrerer Brennräume der Verbrennungskraftmaschine mit einem verdichteten, gasförmigen Kraftstoff aufweist. Der aus dem Primärtank entnommene Kraftstoff wird mittels einer geeigneten Vorrichtung, insbesondere einer Raildruckpumpe, verdichtet und unter dementsprechend erhöhten Druck im Rail zwischengespeichert. Das Rail steht über Hochdruckleitungen mit den einzelnen Injektoren zur Kraftstoffeinspritzung in Verbindung. Erfindungsgemäß wird vorgeschlagen, entgegen der langjährigen Praxis, das Soll-Druckniveau des im Rail gespeicherten Kraftstoffes - den sogenannten Raildruck - nicht bzw. deutlich weniger dynamisch in Abhängigkeit der Motorlast zu variieren. Stattdessen soll der Raildruck-Istwert, der innerhalb des gesamten Drehzahl-Drehmoment-Bereiches, in dem die Verbrennungskraftmaschine betrieben wird, auf einen idealerweise konstanten oder zumindest nur geringfügig variierenden Raildruck-Sollwert eingeregelt bzw. anderweitig gehalten werden. Ein anderweitiges Halten kann bspw. durch eine Steuerung erfolgen. Im Idealfall liegt ein nahezu konstantes Niveau des Raildrucks vor, das unabhängig von der aktuellen Motorlast ist, d.h. der Druckwert des im Rail gespeicherten Kraftstoffes, der sogenannte Raildruck ist sowohl im Volllastbetrieb als auch im Teillastbetrieb und sogar Motorleerlaufbetrieb nahezu identisch.

Dabei wird der Raildruck-Sollwert vorzugsweise in Hinblick auf den Betriebsfall des maximalen Kraftstoff-Momentanbedarfes definiert, wobei sich jener Kraftstoffbedarf aufgrund der Bauart bspw. durch eine für jene Limitierung ausschlaggebende Bauteilbestückung der Verbrennungskraftmaschine inkl. ihrer Abgasnachbehandlung, einer legislativ begründeten oder einer anderweitigen Limitierung ergibt. Demzufolge lässt sich bei einer Abdeckung des Raildruck-Sollwertes durch den entsprechenden Istwert eine ausreichende Kraftstoffversorgung im Betriebsfall des maximalen Kraftstoffbedarfes der Verbrennungskraftmaschine erzielen. Damit steht auch bei einer hochdynamischen Steigerung der angeforderten Abgabeleistung der Verbrennungskraftmaschine der zur möglichst weitgehenden Erfüllung dieser Anforderung vorgesehene Kraftstoffdruck quasi verzögerungsfrei zur Verfügung, sodass auch bei Verwendung eines gasförmigen Kraftstoffes ein hochdynamisches Verhalten des von der Verbrennungskraftmaschine anzutreibenden Systems - bspw. eines Fahrzeuges oder einer mobilen Arbeitsmaschine - deutlich wirkungsvoller unterstützt werden kann als dies mit einem Common Rail System gemäss dem Stand der Technik erfüllt werden könnte.

Das erfindungsgemäße Verfahren dient insbesondere zum Betrieb eines Gasmotors. Als Kraftstoff kommt ein gasförmiger Kraftstoff zum Einsatz, wobei der Vorteil des erfindungsgemässen Verfahrens dann zum Vorteil kommt, wenn der Kraftstoff im Rail in seinem gasförmigen Aggregatzustand vorliegen muss. Ob der Kraftstoff im Primärtank bspw. in Flüssigform vorliegt, ist im Hinblick auf die vorliegende Erfindung unerheblich. Insbesondere wird Wasserstoff als Kraftstoff eingesetzt. Denkbar ist die Anwendung des Verfahrens auch auf eine Verbrennungskraftmaschine, die andere gasförmige Kraftstoffe z.B. Erdgas nutzt.

Für den Betrieb einer erfindungsgemässen Verbrennungskraftmaschine ist es wünschenswert, dass die Öffnungszeiten der Injektoren, genauer der am momentanen Betrieb der Verbrennungskraftmaschine aktiv beteiligten Injektoren - unabhängig von der Auslastung der Verbrennungskraftmaschine - vorzugsweise gar nicht oder geringstmöglich verkürzt werden. Hintergrund dafür ist, dass bei längeren Ventilöffnungszeiten eine bessere Reproduzierbarkeit der eingespritzten Kraftstoffmenge möglich ist. Idealerweise bleibt die Öffnungszeit der Injektorventile betriebspunktunabhängig konstant bzw. wird in keinem Motorbetriebspunkt soweit verkürzt, dass ein wesentlicher Anteil der Kraftstoffdurchströmung über einen Injektor während seines Schaltübergangs (Öffnen oder Schliessen) erfolgt.

Im Teillastbetrieb wird bei einem durchweg gleichbleibenden resp. lediglich einem geringfügig variierenden Raildruck in Bezug auf die Haupteinspritzungen eine jeweilige Konstanthaltung der Ventilöffnungszeiten bzw. ein jeweils dauerhaftes Überschreiten einer Mindestöffnungsdauer, die auf einem vergleichsweise hohen Niveau verbleibt, dadurch erreicht, indem lastabhängig ein oder mehrere Zylinder deaktiviert werden. Das Deaktivieren eines Zylinders kann sich auf einen einzigen Motorzyklus beschränken, d.h. im Fall eines 4-Takt Motors auf zwei Umdrehungen der Kurbelwelle. Hierfür bieten sich unterschiedliche Konzepte der Zylinderabschaltung an. Vorstellbar ist eine dynamische Zylinderabschaltung, bspw. mit dynamischer Änderung der Anzahl deaktivierter Zylinder. Bspw. ist eine alternierende Abschaltung von n, n+1 Zylindern vorstellbar. Auch ist es sinnvoll stets unterschiedliche Zylinder abzuschalten, zwecks Vermeidung einer Verschleiss-Fokussierung auf bestimmte Zylinder oder bestimmter zylinderspezifischer Motorbauteile. Ferner bewirkt das Vermeiden einer längerfristigen Abschaltung eines individuellen Zylinders sein Auskühlen und im Hinblick auf den Gesamtmotor einen erhöhten Bedarf an Kühlleistung.

Die vorstehende Erklärung bezog sich auf den Idealfall, dass der Raildruck-Solldruck unabhängig von der aktuellen Motorlast konstant bleibt. Es besteht jedoch auch die Möglichkeit, diesen Sollwert-Raildruck zumindest in einer vergleichsweise geringen Bandbreite zu variieren, die jedoch deutlich enger bemessen ist als die erforderliche Spreizung Im Fall einer konventionellen Verbrennungskraftmaschine, bei der sich der aktuelle Raildruck-Sollwert bereits bei einer vergleichsweise geringen Änderung der Motorbelastung und/oder einer vergleichsweise geringen Änderung der Motordrehzahl sehr deutlich variiert. Bezogen auf den Nennwert des Rails (s.u.) ändert sich für eine erfindungsgemässe Verbrennungskraftmaschine die Bandbreite Raildruck-Sollwertes um maximal 10 Prozent und idealerweise nur um maximal 5 Prozent. Mit der Umschreibung *Nennwert des Rails* ist der für den tatsächlichen Einsatz vorgesehene Maximalwert des Raildrucks gemeint, d.h. der Raildruck, der gemäss der Motorsteuerung im Motorbetriebspunkt bzw. der Betriebssituation des maximalen noch abzudeckenden Kraftstoffbedarfes der Verbrennungskraftmaschine vorliegen muss.

Für die Kraftstoffeinspritzung aus dem Rail in die Brennräume sind unterschiedliche Konzepte vorstellbar. Denkbar ist die Saugrohreinspritzung, wobei in diesem Fall der konstante bzw. zumindest annähernd konstante Raildruck-Sollwert in einer Größenordnung zwischen 8 bar und 25 bar, besonders bevorzugt zwischen 10 bar und 20 bar und idealerweise zwischen 12 bar und 18 bar liegen sollte.

Aufgrund des im Betrieb konstant bzw. zumindest annähernd konstant bleibenden Raildruck-Sollwertes ergibt sich eine Flexibilität in der Ausführung des Rails. Insbesondere kann für einen Gasmotor, der mit dem erfindungsgemässen Verfahren betrieben wird, das zu Verfügung stehende Gesamtvolumen, welches den zur Einspritzung vorgesehenen Kraftstoff unmittelbar bereithält, im Folgenden das *effektive Railvolumen* (s.u.) genannt, erheblich vergrössert werden, woraus eine erfindungsgemässe Verbrennungskraftmaschine klarerweise den Vorteil bezieht, dass dadurch die hierbei erwünschte weittestgehende Konstanz begünstigt wird. Bevorzugt kann das Größenverhältnis des effektive Railvolumen und des Motorgesamthubraums mindestens 4% und maximal 40 % betragen, bevorzugt mindestens 4% und maximal 25 % und besonders bevorzugt mindestens 8% und maximal 25% betragen. In Bezug auf jene Prozentangaben beinhalten die zugrunde gelegten Zahlenwerte nicht allein die jeweiligen Railvolumina, sondern zusätzlich jeweils auch das kumulierte Innenvolumen in den Kraftstoff-Hochdruckverbindungen zwischen dem Rail und den jeweiligen Injektoren. Aus diesem Grund wird die Umschreibung *effektive Railvolumen verwendet.*

Alternativ zur Saugrohreinspritzung kann die Kraftstoffzuführung in die Brennräume auch per Direkteinspritzung erfolgen. Vorstellbar sind an dieser Stelle eine Niederdruck- und eine Hochdruck-Direkteinspritzung. Im Fall einer Niederdruck-Direkteinspritzung liegt bevorzugt ein konstantes Sollniveau des Raildrucks vor, wobei sich dieser Sollwert zwischen 8 bar und 25 bar befindet, besonders bevorzugt zwischen 10 bar und 20 bar sowie idealerweise zwischen 12 bar und 18 bar. In der Ausführungsform einer Hochdruck-Direkteinspritzung liegt vorzugsweise ein konstantes Sollniveau des Raildrucks vor, wobei sich dieser Sollwert in einer Größenordnung zwischen 150 bar und 500 bar befindet, besonders bevorzugt zwischen 200 bar und 400 bar und idealerweise zwischen 200 bar und 350 bar.

Bei Ausführung einer Direkteinspritzung kann das Größenverhältnis des zur Verfügung stehende effektive Railvolumen und des Motorgesamthubraums mindestens 1% und maximal 32 % betragen, bevorzugt mindestens 2% und maximal 16 % und idealerweise mindestens 2% und maximal 8% betragen.

Wie bereits vorstehend erläutert wurde, wird für die Anpassung des Motorbetriebs in Abhängigkeit der Motorlast eine Zylinderabschaltung ausgeführt. Dabei kann vorgesehen sein, dass die Gaswechselventile eines deaktivierten Zylinders anders betrieben werden als jene Ventile eines aktivierten Zylinders. Besonders bevorzugt kann hierbei vorgesehen sein, dass die Gaswechselventile eines deaktivierten Zylinders komplett geschlossen bleiben. Generell kann es sich bei der aktiven Zylinderabschaltung um eine dynamische Zylinderabschaltung handeln, das heisst die Anzahl der zu deaktivierenden Zylinder ändert sich dynamisch in Abhängigkeit der aktuellen Motorlast.

Für die Aufladung des Rails ist eine Hochdruckpumpe, eine sogenannte Raildruckpumpe vorgesehen, die den im Bedarfsfall aus dem Primärtank entnommenen Kraftstoff verdichtet und dem Rail derart zuführt, sodass einer Unterschreitung des Raildruck-Sollwertes durch den Raildruck-Istwertes vermieden oder zumindest entgegengewirkt wird. Da gemäß dem erfindungsgemäßen Verfahren bereits im unteren Drehzahlbereich bzw. bereits im Leerlaufbetrieb der Verbrennungskraftmaschine, d.h. im Fall eines vergleichsweise geringen Kraftstoffbedarfes das gleiche oder zumindest ein annähernd gleiches Niveau des Raildruckes aufrechterhalten wird, wie im Hochlastbetrieb, muss die Raildruckpumpe entsprechend ausgelegt sein. Eine konventionell betriebene Raildruckpumpe, die mit einem festen Drehzahlübersetzungsverhältnis zur Kurbelwellen-Drehzahl mitbewegt wird, wäre klarerweise energetisch und in Anbetracht des zu erwartenden Verschleisses sehr ungünstig. Vorzugsweise wird eine bedarfsgerecht betreibbare Raildruckpumpe verwendet, deren Förderleistung und Ausgangsdruck unabhängig von der Kurbelwellen-Drehzahl betrieben werden kann. Diesbezüglich denkbar ist beispielsweise eine getaktete Ansteuerung der Raildruckpumpe, wobei die Taktung auf diejenigen Zeiträume synchronisiert wird, innerhalb derer eine jeweilige Einspritzung von Kraftstoff in die aktiven Zylinder der Verbrennungskraftmaschine ansteht. Eine Umsetzungsmöglichkeit ist das Antreiben der Raildruckpumpe mit einem Elektromotor. In einer vorteilhaften Umsetzung kann durch eine entsprechende Software, die vorzugsweise Bestandteil der Motorsteuerung ist, die Raildruckpumpe prädiktiv betrieben werden. Besonders bevorzugt wird der gesamte Kraftstoff-Bereitstellungspfad ausgehend vom Primärtank bis zum Rail prädiktiv betrieben. Sodann besteht die Option, dass bei einem Anstieg des Kraftstoffbedarfes anstelle eines eintretenden Rückgangs des Raildruck-Istwerts, der dann lediglich nacheilend wieder auf seinen Sollwert angehoben wird, stattdessen eine vorausschauende leichte Anhebung des Raildruckes umgesetzt werden kann, wodurch anstelle eines vergleichsweise grossen Rückgang des Raildruck-Istwertes eine Stabilisierung um den in der Motorsteuerung als Bestwert hinterlegten Raildruck erfolgen kann. Letztere Massnahme ermöglicht eine Stabilisierung des Raildruck-Istwerts, der sich lediglich innerhalb einer geringen Bandbreite um jenen Bestwert bewegt.

Neben dem erfindungsgemäßen Verfahren betrifft die vorliegende Erfindung auch eine Verbrennungskraftmaschine mit mindestens zwei Zylindern und einem System zur Kraftstoffeinspritzung, bei dem der Kraftstoff aus einem Primärtank entnommen werden kann und unter einer gegenüber dem atmosphärischen Druck deutlich verdichteter Form einem Rail zuführbar ist, wobei mehrere und ggf. sämtliche Zylinder Kraftstoff aus dem gemeinsam genutzten Rail beziehen. Erfindungsgemäß umfasst die Verbrennungskraftmaschine eine Motorsteuerung, die konfiguriert ist, das Verfahren gemäß der vorliegenden Erfindung auszuführen. Demzufolge ergeben sich für die Verbrennungskraftmaschine dieselben Vorteile und Eigenschaften, wie sie bereits vorstehend anhand des erfindungsgemäßen Verfahren aufgezeigt wurden. Auf eine wiederholende Beschreibung wird aus diesem Grund verzichtet.

Weitere Vorteile und Eigenschaften der Erfindung sollen nachfolgend anhand der Figuren näher erläutert werden. Es zeigen:
- Figur 1:: ein schematisches Blockschaltbild einer konventionellen Verbrennungskraftmaschine mit Common Rail Einspritzung,
- Figur 2:: ein Zeitdiagramm zur Visualisierung der relevanten Zustandsgrößen bei einer Kraftstoffeinspritzung,
- Figur 3:: unterschiedliche Sequenzdarstellungen für eine mögliche Zylinderabschaltung der Verbrennungskraftmaschine,
- Figur 4:: schematisch dargestellte Drehzahl-Drehmoment-Volllastkurven in Abhängigkeit der aktiven Zylinderanzahl (die jeweils durchgängigen Linienzüge) sowie die entsprechenden Volllastkurven bei alternierendem Betrieb (die gepunkteten Linienzüge) und ein schematisch angedeutetes Kraftstoffverbrauchskennfeld des 4-Zylindermotors.

Die Erfindung betrifft ein Verfahren zum Betrieb einer Verbrennungskraftmaschine, die einen gasförmigen Kraftstoff bezieht und System zur Kraftstoffeinspritzung umfasst. Diesbezüglich kann eine solche erfindungsgemäße Verbrennungskraftmaschine auf dem grundsätzlichen Aufbau eines Common-Rail-Systems gemäß Figur 1 basieren, das ein Rail 2 aufweist. Die Kraftstoffzuführung in die Brennräume (nicht dargestellt) erfolgt über Öffnungszeiträume der jeweiligen Injektoren 1, die den gasförmigen Kraftstoff, insbesondere Wasserstoff, aus einem Rail 2 beziehen. Dieses wird über eine Raildruckpumpe 6, mit Kraftstoff versorgt, der aus dem nicht dargestellten Primärtank entnommen wird. Im gezeigten Ausführungsbespiel wird der Volumenstrom aus dem Primärtank zur Raildruckpumpe 6 von der Motorsteuerung 3 mittels des Volumenstrom-Regelventils (VCV) 5 gesteuert.

Ein Drucksensor 7 erfasst den Raildruck, d.h. den Druck innerhalb des Rails 2, dessen Wert in der Motorsteuerung 3 berücksichtigt wird. Über ein durch die Motorsteuerung 3 steuerbares Druckregelventil (PCV) 4 kann der gasförmige Kraftstoff aus dem Rail 2 abgeführt werden. In einer einfachen Ausführungsform kann unter der Voraussetzung, dass ein hinreichend grosser Kraftstoffzufluss abgedeckt werden kann, über eine durch die Motorsteuerung 3 festgelegte alleinige Ansteuerung der Ventile 4, 5 der Raildruck auf einen definierten Sollwert geregelt oder anderweitig gehalten werden. Ein anderweitiges Halten kann bspw. durch eine Steuerung erfolgen. In einer bevorzugten Ausführungsform verfügt die Verbrennungskraftmaschine über eine bedarfsgerecht betreibbare Raildruckpumpe. Neben dem Ausgangswert des Drucksensors 7 erhält die Motorsteuerung 3 zahlreiche weitere Betriebsgrössen und -parameter des Antriebssystems 10 sowie quantitative Informationen über Bedienungseingriffe, von denen in der Figur 1 lediglich exemplarisch der Messwert-Signalfluss eines Kurbelwellensensors 11 und der Messwert-Signalfluss eines Nockenwellensensors 12 dargestellt sind. Neben den Ventilen 4, 5 kann die Motorsteuerung 3 auch das Öffnen und Schliessen eines jeweiligen Injektors 1 vorgeben. Daher obliegt unter anderem eine temporäre Deaktivierung einzelner Zylinder der Motorsteuerung 3.

Kennzeichnend für die Erfindung ist an dieser Stelle insbesondere die neuartige Motorsteuerung 3 zur Regelung des Soll-Druckwertes innerhalb des Rails 2, insbesondere in Verbindung mit einer lastabhängigen dynamischen Zylinderabschaltung.

Das erfindungsgemässe Verfahren bzw. die erfindungsgemässe Verbrennungskraftmaschine zeichnet sich dadurch aus, dass der Raildruck-Sollwert eine sehr deutlich verringerte Abhängigkeit vom Drehzahl-Drehmomenten-Arbeitspunkt der Verbrennungskraftmaschine aufweist und idealerweise sogar konstant ist. Klarerweise muss bei der erfindungsgemässen Verbrennungskraftmaschine der gleiche Leistungsbereich abgedeckt werden, beginnend bei einem Leerlaufbetrieb bis hin zu den Betriebspunkten entlang der Vollastkennlinie. Ferner soll die Einsatzmöglichkeit der erfindungsgemässen Verbrennungskraftmaschine insbesondere für Anwendungen erfüllbar sein, die hohe Dynamikanforderungen aufweisen.

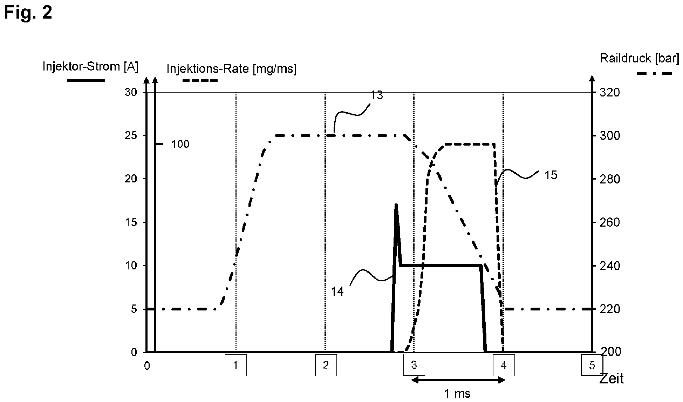

Die Reproduzierbarkeit einer Kraftstoff-Einspritzmenge ist bei kürzeren Öffnungszeitdauern eines Injektors 2 unter Beibehaltung aller sonstigen hierauf einflussnehmenden Bedingungen deutlich schlechter als bei Kraftstoff-Einspritzungen unter einer längeren Öffnungszeitdauer, was anhand des in Figur 2 abgebildeten Diagramms erklärt werden kann. Dargestellt sind die vereinfachten Zeitverläufe des Injektor-stroms 14, der Injektionsrate 15 und des Raildrucks 13 während eines Einspritzvorgangs. Vor dem betrachteten Einspritzvorgang wurde der Raildruck 13 auf ein bestimmtes Niveau angehoben. Das Bestromen des Injektors 1 führt zu seiner Öffnung und setzt damit einen Kraftstoffzufluss vom Rail 2 in Richtung des Brennraumes in Gang, woraufhin der Raildruck 13 abnimmt. Auch in der Realität liegt zwischen dem elektrischen Stromfluss 11 zum Injektor 1 und dem Kraftstoffdurchfluss 12 ein gewisser Zeitverzug vor, der in dem Diagramm zur Verdeutlichung in einer übertriebenen Grössenordnung aufgezeigt ist.

Die Betätigung eines solchen Injektors 1, der sich auch zur Förderung hoher Injektionsraten eignet, erfolgt zumeist über ein Magnetventil, also letztlich über einen Elektromagneten. Somit weist der elektrische Stromkreis, der innerhalb des Injektors 1 angeordnet ist, eine vergleichsweise hohe Induktivität auf. Bekanntermassen führt das Vorhandensein einer Induktivität in einer elektrischen Verbindung zu einer verzögerten Stromstärken-Änderung längs dieser Verbindung. Da schnelle Ansprechzeiten für das Öffnen und Schliessen eines Injektors 1 essentiell sind, ist die elektrische Schaltung zur Bestromung des Elektromagneten entsprechend erweitert, unter der Zielsetzung die aufgrund der Induktivität der Magnetspule hervorgerufene Verzögerung zu kompensieren, was bis zu einem gewissen Grad möglich ist. Eine Fokussierung auf jene Massnahme ist jedoch in der hier anzustellenden Betrachtung unerheblich. Neben der elektrisch bedingten Verzögerung kommt eine mechanisch bedingte Verzögerung hinzu, bedingt durch die Bewegung der Ventilnadel in ihre Öffnungsposition. Ein Artefakt der elektrischen Kompensationsmassnahmen zur Verkürzung der Einschaltzeitdauer des Elektromagneten ist die kurzzeitige starke Überhöhung des Injektor-Stroms 14.

Während der Injektor 1 öffnet, setzt bereits ein Kraftstoffzufluss ein, und während der Injektor bereits schliesst, besteht zunächst noch ein Kraftstoffzufluss, dessen Zeitdauer zwecks Verdeutlichung in einer übertriebenen Ausprägung in Figur 2 dargestellt ist. Während dieser Schaltübergänge ist der Druckabfall längs des Injektor-Kraftstoffpfades weitaus weniger gut definiert als bei einem vollständig geöffneten Injektor 1, denn bei einem vollständig geöffneten Injektor 1 liegt im betrachteten Kraftstoffpfad ein konstanter oder zumindest annährend konstanter Strömungswiderstand vor. Aufgrund des sogenannten Injektor-Prellens sind nicht einmal die Bewegungsvorgänge des Verschlusselementes eines Injektors 1 exakt reproduzierbar. Bei einem vergleichsweise grossen Kraftstoffvorrat im Rail 2 und einer kleinen Injektions-rate bleibt Letztere annähernd konstant, sofern sich der Raildruck nur aufgrund des betrachteten Einspritzvorgangs ändert, d.h. langsam abnimmt.

Für das Erzielen einer hohen Einspritzmengen-Genauigkeit sind demnach längere Injektor-Öffnungszeiten vorteilhaft, weil dann die während der Schaltübergänge eher undefinierten Kraftstoffmengen einen kleineren Anteil derjenigen Kraftstoffgesamtmenge ausmachen, die während eines kompletten Einspritzvorgangs (vom Beginn bis zum Ende einer Einspritzung) injiziert worden ist.

Damit die extrem kurzen Öffnungszeiten der Injektoren 1, die sich bei einem dem Stand der Technik entsprechenden Common Rail System dann ergeben, sofern sich die Verbrennungskraftmaschine im unteren Teillastbetrieb und am stärksten ausgeprägt im Leerlaufbetrieb befindet, vermieden werden, sieht die Erfindung bei Vorliegen einer geringen Auslastung der Verbrennungskraftmaschine eine bewusst herbeigeführte Zylinderabschaltung vor. Letzteres vermeidet, dass bei einer erfindungsgemässen Verbrennungskraftmaschine die Anzahl der Haupteinspritzungen, bei denen vergleichsweise kurze Öffnungszeiten der Injektoren 2 vorliegen, stark vermindert wird. Ferner werden in Bezug auf die Haupteinspritzungen das gesamte Kollektiv derjenigen Injektor-Öffnungszeiten, die bei einer niedrigen bis mittleren Auslastung der Verbrennungskraftmaschine auftreten, ganz erheblich gesteigert. Kurze oder gar extrem kurze Injektor-Öffnungszeiten, sind deshalb von grossem Nachteil, weil dabei ein Grossteil der gesamten Kraftstoffzuführungsmenge während der besagten Schaltübergänge erfolgt und daher eine vergleichsweise hohe Abweichung zwischen den jeweils korrespondierenden Istwerten und Sollwerten einer Kraftstoffportion eines Einspritzungsvorgangs bestehen. Erfindungsgemäss wird die Variabilität des Raildruck-Sollwertes in Abhängigkeit der Auslastung der Verbrennungskraftmaschine auf ein sehr geringes Mass begrenzt und idealerweise vollständig vermieden. Das Entsprechende gilt für den Raildruck-Istwert. Klarerweise muss sich der Raildruck-Istwert permanent in einer Grössenordnung befinden, mit der idealerweise augenblicklich eine Kraftstoffversorgung für den Betriebsfall des maximalen Kraftstoffbedarfes abgedeckt werden kann oder zumindest sich sehr nahe an einem solchen Druckniveau befinden, sodass eine entsprechende Erhöhung des Raildruckes und damit eine entsprechende Kraftstoffversorgung innerhalb einer sehr kurzen Zeit möglich ist. Die weitgehende Konstanthaltung des Raildrucks bietet den zusätzlichen Mehrwert, dass die Spritzlochgeometrie einer Injektordüse derart gestaltet werden kann, dass sie auf ein ganz bestimmtes Druckniveau des einzuspritzenden Kraftstoffes möglichst optimal ausgeführt werden kann. Bezugnehmend auf eine dynamisch betriebene Verbrennungskraftmaschine weisen die Kraftstoff-Spraybilder der Einspritzungen durch die Umsetzung einer solchen Massnahme, d.h. für eine erfindungsgemässe Verbrennungskraftmaschine eine technisch weitaus vorteilhaftere Erscheinungsform auf, die wiederum weitaus günstiger für den gesamten Verbrennungsvorgang ist.

Hinsichtlich seines konstruktiven Aufbaus kann sich das erfindungsgemässe System gegenüber konventionellen Systemen ergänzend darin unterscheiden, dass die zur Kraftstoff-Zwischenspeicherung vorgesehene Kapazität im Rail 2 wesentlich grösser dimensioniert wird als bei nicht erfindungsgemässen Verbrennungskraftmaschinen. Präziser ausgedrückt, ist die zur Kraftstoff-Zwischenspeicherung vorgesehene Kapazität *K* in Bezug auf den chemischen Energieinhalt des Kraftstoffes im Rail 2 in Bezug auf das korrespondierende Hubraum-Gesamtvolumen V in einer erfindungsgemässen Verbrennungskraftmaschine wesentlich grösser. Zur besseren Lesbarkeit des Folgetextes wird der Begriff bzw. die Grösse des charakteristischen Zahlenverhältnisses c = K/*V* eingeführt. Das charakteristische Verhältnis c wird massgeblich von der volumetrischen Energiedichte des Kraftstoffes unter Berücksichtigung des Raildruckes beeinflusst.

Gemäß dem Stand der Technik entsprechenden und ansonsten vergleichbaren Verbrennungskraftmaschinen weist das charakteristische Zahlenverhältnis c eine starke Abhängigkeit von der momentanen Motorabgabeleistung auf. Bei einer erfindungsgemässen Verbrennungskraftmaschine ist das charakteristische Zahlenverhältnis c = *K*/*V* in allen Drehzahl-Drehmoment-Arbeitspunkten idealerweise konstant und weist in einer realen Betrachtung lediglich eine geringe bis sehr geringe Abhängigkeit von der momentanen Motorabgabeleistung auf. Für den Folgetext wird die Bezeichnung *effektives Railvolumen* verwendet. Dies ist das gesamte Innenvolumen, in dem sich der unter Hochdruckniveau, dem sogenannten Raildruck, verdichtete Kraftstoff befindet. Dazu gehört das Innenvolumen des Rails 2 zuzüglich des Gesamtvolumens aller Verbindungsleitungen zwischen dem eigentlichen Rail 2 und den jeweiligen Innenraum-Teilbereichen der Injektoren 1, die auch bei einem geschlossenen Injektor 1 noch mit dem sich unter dem Raildruck befindenden Kraftstoff gefüllt sind.

In den aus dem Stand der Technik vorbekannten Anwendungen einer Zylinderabschaltung soll ein höherer Wirkungsgrad der Verbrennungskraftmaschine im unteren und mittleren Teillastbetrieb erzielt werden und/oder eine Erhöhung der Abgastemperatur unter Vermeidung eines Kraftstoffmehrverbrauches erreicht werden, die für die Abgasnachbehandlung erforderlich oder zumindest vorteilhaft ist. Zwar können diese Vorteile auch bei der erfindungsgemässen Verbrennungskraftmaschine ausgenutzt werden, aber primär wird durch die selektive Zylinderabschaltung bei der erfindungsgemäßen Verbrennungskraftmaschine jedoch das Ziel eines nahezu konstanten Solldruckes im Rail 2 verfolgt. Die erfindungsgemässe, mit einem gasförmigen Kraftstoff betriebe Verbrennungskraftmaschine bietet gegenüber herkömmlichen Gasmotoren eine deutlich höhere Dynamik auf, die für zahlreiche Anwendungen grosse Vorteile bietet und für bestimmte Anwendungen fundamental entscheidend dafür ist, dass sich ein Gasmotor für die jeweilige Anwendung überhaupt erst eignet.

Das erfindungsgemässe System bzw. Verfahren kann vorzugsweise bei einer Zylinder-Direkteinspritzung, jedoch auch bei einer Saugrohreinspritzung des Kraftstoffes angewendet werden. Jeweils typische maximale Raildrücke, insbesondere für einen Wasserstoffmotor liegen bei einer Saugrohreinspritzung und gleichermassen für eine Niederdruck Direkteinspritzung bei 20 bar. Ein typischer maximaler Raildruck für eine Hochdruck Wasserstoff-Direkteinspritzung liegt bei 300 bar. Dem Fachmann ist bekannt, dass eine Hochdruck Direkteinspritzung aus rein technischer Sicht das bessere Konzept ist. Allerdings hat aufgrund seines deutlich geringeren Aufwands das Niederdruck sehr wohl seine Berechtigung. Der Druckbereich der vorgenannten Einspritzkonzepte lässt sich wie folgt zusammenfassen:
Direkteinspritzung (Niederdruckkonzept) -> LPDI:
   variabler Raildruck in Abhängigkeit der Motorbelastung zw. 8 bar bis 20 (25) bar
Direkteinspritzung (Hochdruckkonzept) -> HPDI:
   variabler Raildruck in Abhängigkeit der Motorbelastung zw. 150 bar bis 300 (400) bar
Saugrohreinspritzung:
   variabler Raildruck in Abhängigkeit der Motorbelastung zw. 8 bar bis 20 (25) bar

Für jedes dieser drei Konzepte wird nachfolgend ein konkretes, mögliches erfindungsgemäßes Ausführungsbeispiel eines Wasserstoffmotors benannt. Die folgende Tabelle enthält die Abmessungen des jeweils eingesetzten Rails 2, sowie das jeweils effektive Railvolumen jener drei Ausführungsbeispiele. Indem abweichend zu den momentan verfügbaren solche Rails Verwendung finden, deren Dimensionierung und Formgebung in Bezug auf das erfindungsgemässe Konzept eine technische Verbesserung bis hin zu einer technischen Optimierung entspricht, können die jeweiligen effektiven Railvolumina nochmals gesteigert werden.

Der Hubraum der hier konkret untersuchten Verbrennungskraftmaschinen beträgt jeweils ca. 8 l. Die maximale Wasserstoff-Zuführungsmenge für jeweils eine Haupteinspritzung (in einem Zylinder) beläuft sich auf ca. 80 mg. Bei 30° C und einem Druck von 300 bar beträgt das spezifische Gewicht von Wasserstoff etwa 20 kg/m³. Bei 30° C und einem Druck von 50 bar beträgt das spezifische Gewicht von Wasserstoff ungefähr 3.5 kg/m³. Die nachfolgende Tabelle weist einige Eckdaten auf, welche für bereits durchgeführten Untersuchungen der vorliegenden Erfindung massgeblich sind.

**Tabelle 1: Angaben zu den z.Z. genutzten Rails für die jeweiligen Versuchsmotoren der drei Konzepte**

| Angaben zum Rail des jeweiligen H2-Versuchsmotors | Angaben zu den Leitungen zw. Rail und den Injektoren | | | Railvolumen [I] | effektives Railvolumen [I] | H2-Menge im Rail [mg] | Quotient [%] der Maximalmenge einer H2-Ein-spritzung in Bezug auf den H2-Gesamtinhalt des Rails |
|---|---|---|---|---|---|---|---|
| | Strömungsdurchmesser [mm] | Längen [mm] | Gesamtvolumen [l] | | | | |
| HPDI (250 bar) | 3.5 | 4 x 420 | 0.01616 | 0.03982 | 0.05598 | 997 | 5.6 |
| LPDI (50 bar) | 7 | 4 x 420 | 0.06464 | 0.03982 | 0.1045 | 365.75 | 21.9 |
| Saugrohr (15 bar) | 7 | 4 x 420 | 0.06464 | 0.03982 | 0.1045 | 110 | 6.6 |

Die obige Tabelle weist die Werte eines 4-Zylinder Wasserstoffmotors auf. Der hierfür angegebene charakteristische Zahlenwert in Prozent, der das Verhältnis der sich im Rail unter Betriebsdruck befindenden Wasserstoffmenge und der Maximalmenge einer Haupteinspritzung quantifiziert, basiert jeweils auf der Wasserstoffmasse. Unter Berücksichtigung der Energiedichte und des Motorwirkungsgrads kann jener Wert für andere Kraftstoffe bzw. unterschiedliche Kraftstoff-Gemische auf einfache Weise berechnet werden.

Die Zahlenwerte für Verbrennungskraftmaschinen mit einer anderen Zylinderanzahl können abweichen. Bei einer ähnlichen Anzahl an Zylindern mag eine proportionale Skalierung gemäss der Zylinderanzahl halbwegs korrekt sein.

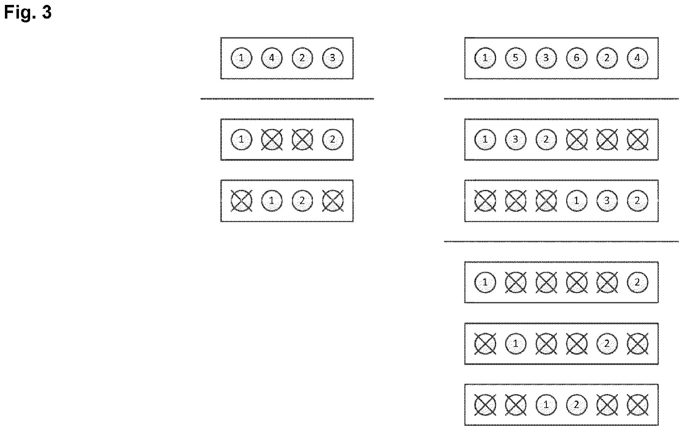

Die erfindungsgemässe Verbrennungskraftmaschine kann derart betrieben werden, dass im Fall einer jeweils konstanten Abgabeleistung unabhängig von dem jeweiligen Wert der Abgabeleistung in jeweils zwei aufeinanderfolgenden Arbeitsspielen des Vollmotors, d.h. im Fall eines 4-Taktmotors nach dem Durchlaufen eines Kurbelwellenwinkels von jeweils 720°, stets die gleiche Anzahl von Zylindern aktiv betrieben wird. Hierbei wird jedoch darauf geachtet, dass während aufeinanderfolgender Arbeitsspiele nicht immer dieselben Zylinder deaktiviert werden, sondern das Deaktivieren auf alle verfügbaren Zylinder aufgeteilt wird. Mögliche Abschaltungsmuster sind in der Figur 3 exemplarisch für einen Vierzylinder (links) sowie einen Sechs-Zylindermotor (rechts) dargestellt. Beim dargestellten Vierzylindermotor werden abwechselnd entweder die Zylinder 2, 4 oder alternativ 1, 3 deaktiviert. Beim Sechszylindermodel werden abwechselnd die Zylinder 1, 3, 5 oder 6, 2, 4 gemeinsam deaktiviert. Alternativ können auch mehr als die zwei Muster zur Abschaltung der Zylinder ausgeführt werden, siehe Figur 3, rechts unten.

Bei der erfindungsgemässen, exemplarisch als 4-Zylinder Verbrennungsmotor ausgeführten Verbrennungskraftmaschine kann der Fall auftreten, dass die über einen gewissen Zeitraum benötigte Soll-Abgabeleistung durch einen Zwei-Zylinderbetrieb (2 der 4 Brennräume werden aktiv betrieben und die verbleibenden zwei Brennräume sind deaktiviert) gerade nicht bereitgestellt werden kann, während die bereitstellbare Leistung im Drei-Zylinderbetrieb deutlich oberhalb der Soll-Abgabeleistung liegt. In einer solchen Konstellation wird anstelle eines dauerhaften Drei-Zylinderbetriebes ein alternierender Betrieb vorgeschlagen. Hierbei werden bspw. in einem ersten Arbeitsspiel des 4-Zylinder Verbrennungsmotors drei Zylinder aktiv betrieben, derweil bei dem verbleibenden Zylinder eine Kraftstoff-Zuführung unterbleibt und dessen Gaswechselventile durchweg geschlossen bleiben. In dem daraufhin folgenden Arbeitsspiel werden hingegen lediglich zwei Zylinder aktiv betrieben, derweil bei den verbleibenden zwei Zylindern keine Kraftstoff-Zuführung erfolgt und deren Gaswechselventile durchweg geschlossen bleiben.

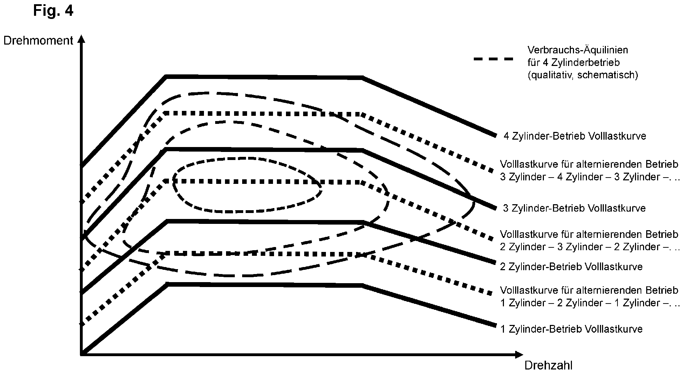

Sofern der Ausnutzungsgrad für einen Drei-Zylinderbetrieb entsprechend gering ist und die Gleichlaufschwankungen hierfür tolerierbar sind, können bei Vorliegen einer entsprechenden Soll-Abgabeleistung in einem ersten und sich daran anschliessenden zweiten Arbeitsspiel des Vollmotors jeweils lediglich zwei Zylinder aktiv betrieben werden, derweil in dem sich daran anschliessenden dritten Arbeitsspiel des Vollmotors drei Zylinder aktiv betrieben werden. Klarerweise ist die hier geschilderte Betriebsweise auf andere Ausnutzungsgrade eines 4-Zylinder Verbrennungsmotors übertragbar und ebenso klarerweise auch auf solche Verbrennungskraftmaschinen, die eine andere Zylinderanzahl aufweisen. Zur Verdeutlichung dieses Aspekts zeigt die Figur 4 anhand eines 4-Zylindermotors schematisch angegebene Volllastast-Kennlinien (das über der Drehzahl aufgetragene maximale Drehmoment) in Abhängigkeit der Anzahl aktiver Zylinder (die durchgezogenen Linienzüge) sowie die Volllastkennlinien bei alternierendem Betrieb (die gepunkteten Linien) des 4-Zylindermotors.

Unter Vernachlässigung der geometrischen Abweichungen, welche dafür erforderlich sind, dass die Anschlussleitungen und ein Raildrucksensor 7 befestigt werden kann, weisen die vorbekannten Rails 2 die geometrische Form eines Prismas auf und dabei zumeist die Form eines Kreiszylinders. Selbiges gilt sowohl für das eigentliche Speichervolumen und das Aussenvolumen eines Rails 2. Eine derartige Ausführung weist die Vorteile auf, dass (i) aufgrund dieser Formgebung die Fertigung vergleichsweise einfach ist, (ii) die Integration des Rails 2 an der Verbrennungskraftmaschine vergleichsweise einfach ist bzw. für ein solches Rails 2 lediglich ein vergleichsweise geringer Bauraum erforderlich ist, der für andere Anbaukomponente nicht zur Verfügung steht, (iii) bezüglich Ihrer Mantelfläche eine hohe Festigkeit begünstigt wird und ferner, dass (iv) eine solche Formgebung des Rails 2 die jeweiligen Verbindungsleitungen zwischen den jeweiligen Injektoren vereinfacht.

Bevorzugt ist der Einsatz einer bedarfsgerecht betreibbaren Raildruckpumpe 6. Besonders bevorzugt wird eine erfindungsgemässe Raildruckpumpe 6 verwendet, die getaktet betreibbar ist. Beim Betrieb unter vorliegender Deaktivierung eines bzw. mehrerer Zylinder wird besonders bevorzugt die Taktung der Raildruckpumpe 6 zur Kraftstoffzufuhr in das Rail 2 auf die Zeiträume innerhalb derer die Kraftstoff-Einspritzung der aktiven Brennräume ansteht, synchronisiert, wobei jene Synchronisierung nicht simultan zur Kraftstoff-Einspritzung erfolgen muss.

Das erfindungsgemässe Betreiben einer erfindungsgemässen Verbrennungskraftmaschine erfordert die Fähigkeit, dass bereits im unteren Drehzahlbereich bzw. bereits im Leerlaufbetrieb eine Bereitstellung des (annähernd) gleichen Raildrucks, wie im Betriebspunkt der maximalen Kraftstoffzuführung möglich ist. Demzufolge wäre das Antreiben der Raildruckpumpe 2 über ein festes Drehzahlverhältnis zur Kurbelwelle von hohem Nachteil.

Wie vorangestellt erläutert, bietet ein erfindungsgemässer Gasmotor ein erhebliches Potenzial für eine Dynamikverbesserung, weswegen bei einer entsprechend gross dimensionierten Auslegung des Rails 2 - d.h. das Rail 2 weist ein deutlich grösseres Innenvolumen auf - letztlich sogar - gleichermassen wie bei einer Verbrennungskraftmaschine, die mit einem Flüssigkraftstoff betrieben wird - die Luftversorgung ausschlaggebend für die Limitierung der Dynamik sein kann. Eine solche auf einem höheren Niveau bestehende Limitierung lässt sich wiederum dahingehend abschwächen, indem die Luftversorgung über ein geeignetes Boost-System verfügt.

Die Vorteile des erfindungsgemäßen Verbrennungsmotors lassen sich nachfolgend nochmals kurz zusammenfassen:
- Es kann ein Rail 2 mit einem sehr viel grösseren Innenvolumen verwendet werden.
   ∘ Das ist wiederum für einen Kraftstoff von geringer Dichte und/oder von hoher Kompressibilität sehr vorteilhaft.
   ∘ Damit erhält bereits die Regelstrecke einen hohen I-Anteil, was die Regelgenauigkeit begünstigt.
- Eine erfindungsgemässe Ausführung der Verbrennungskraftmaschine als Gasmotor weist im Vergleich zu einem nicht erfindungsgemässen Gasmotor eine deutlich erhöhte Motordynamik auf, weil im Fall eines Lastanstieges der Raildruck nicht erst auf einen erhöhten Sollwert angehoben werden muss. Eine solche Anhebung beansprucht im Fall eines Kraftstoffes, der dem Rail 2 in einem gasförmigen Aggregatzustand zugeführt wird, einen vergleichsweise langen Zeitraum und zwar auch dann, wenn zwischenzeitlich nicht einmal eine Kraftstoffabgabe aus dem Rail 2 erfolgt.
- Eine erfindungsgemässe Verbrennungskraftmaschine vereinfacht die Raildruck-Regelung, weil der Raildruck-Sollwert unabhängig vom Drehzahl-Drehmomenten-Motorbetriebspunkt auf einem Konstantwert gehalten werden kann oder auf einem zwar variablen Sollwert, der sich aber nur vergleichsweise langsam und innerhalb einer sehr geringen Bandbreite ändert, weil dieser auch im Fall eines dynamischen Lastzyklus zumindest im Idealfall keine direkte Abhängigkeit vom momentanen Betriebspunkt der Verbrennungskraftmaschine aufweist.
- Da bei einem erfindungsgemässen Betreiben einer Verbrennungskraftmaschine im Kollektiv diejenigen Zeitdauern zwischen den jeweiligen Sequenzen eines Kraftstoffzuführungsintervalls - bestehend aus jeweils einer Haupteinspritzung und optionalen Vor- und Nacheinspritzungen, deutlich länger sind, erhöht sich derjenige Kraftstoffanteil, der den Brennräumen unter wesentlich besser reproduzierbaren Strömungsbedingungen zugeführt wird. Demzufolge sind in Bezug auf das Kollektiv der Haupteinspritzungen die tatsächlich zugeführten Kraftstoffportionen besser determiniert. Dies wiederum ermöglicht eine bessere Mengenabstimmung der jeweiligen Reduktionsmittelzuführungen.
- Die deutliche Bandbreiten-Reduzierung des Raildruckes erlaubt einen auf ein dementsprechend ganz bestimmtes Druckniveau optimierten Aufbau eines Injektors 2 - insbesondere seiner Spritzlochgeometrie, was eine höhere Reproduzierbarkeit einer jeweiligen Kraftstoffeinspritzmenge und des Spraybilds des in den Brennraum gelangenden Kraftstoffs ermöglicht, was wiederum eine solche Auslegung des Injektors 2 begünstigt, die aufgrund eines deutlich stärker determinierten Spraybilds, derart optimiert werden kann, dass eben das Spraybild innerhalb dieser geringen Bandbreite besonders vorteilhaft für den Verbrennungsprozess ist.
- Vereinfachte Parameter-Erhebung für solche Injektoren 2, die in einer erfindungsgemässen Verbrennungskraftmaschine betrieben werden sollen
- Bezogen auf die Haupteinspritzungen sind die minimal auftretenden Einspritzzeiten deutlich länger. Demzufolge steht für Korrekturen der Einspritzmenge in Bezug auf die verfügbare Rechenzeit solcher Korrekturrechnungen und das aktuatorische Umsetzen jener Korrekturen ein vergleichsweise langer Zeitraum zur Verfügung. Darüber bestehen während einer momentanen Haupteinspritzung mehr Zeit-Kontingente zur Verfügung in denen andere «Tasks» durchgeführt werden können, z.B. Sicherheitsfunktionen.
- Es entfallen grössere Kraftstoffmengen, die aus dem Rail 2 in einen ggf. vorhandenen Pufferspeicher oder in den Primärtank abgeführt werden müssten - Letzteres unter Voraussetzung, dass der vorliegende Kraftstoff und die On-board Ausstattung Derartiges ermöglicht - oder entsprechend anderweitig abgeführt werden müssen.
- Im Kollektiv liegt eine Erhöhung des Wirkungsgrades vor, da im Vergleich zu einer Verbrennungskraftmaschine, die auch im unteren und mittleren Teillastbetrieb mit allen Zylindern betrieben wird, werden die aktiven Zylinder einer erfindungsgemässen Verbrennungskraftmaschine im Kollektiv unter einem deutlich erhöhten Mitteldruck betrieben werden.
- Es ergibt sich eine Anhebung der Abgastemperatur im unteren und mittleren Teillastbetrieb Verbrennungskraftmaschine, was wiederum die Wirksamkeit der Abgasnachbehandlung erhöht bzw. im Hinblick auf die selektive katalytische Reaktion eine Ausgangsbasis einer potenziellen Erhöhung jener Wirksamkeit bietet.

### Bezugszeichenliste

| | |
|---|---|
| Kraftstoffinjektor | 1 |
| Rail | 2 |
| Motorsteuerung | 3 |
| Druckregelventil DCV | 4 |
| Volumenstrom-Regelventil VCV | 5 |
| Raildruckpumpe | 6 |
| Drucksensor | 7 |
| Antriebssystem | 10 |
| Messwert Kurbelwellensensor | 11 |
| Messwert Nockenwellensensor | 12 |
| Raildruck-Zeitverlauf | 13 |
| Injektor-Strom-Zeitverlauf | 14 |
| Zeitverlauf der Kraftstoff Injektions-Rate | 15 |

## Patentansprüche

1. Verfahren zum Betrieb einer Verbrennungskraftmaschine mit mindestens zwei Zylindern und einem System zur Kraftstoff-Einspritzung, bei dem der Kraftstoff aus einem Primärtank entnommen und unter einer gegenüber dem atmosphärischen Druck verdichteten Form mindestens einem Rail (2) zugeführt wird und mehrere Zylinder den gasförmigen Kraftstoff aus einem gemeinsam genutzten Rail (2) beziehen,
**dadurch gekennzeichnet,**
**dass** der Raildruck des im Rail (2) gespeicherten gasförmigen Kraftstoffs während des Betriebes der Verbrennungskraftmaschine unabhängig vom Motorbetriebspunkt auf einen konstanten Raildruck-Sollwert oder auf einen variablen Raildruck-Sollwert gehalten wird, wobei sich der variable Raildruck-Sollwert nur in einer Bandbreite B in Bezug auf einen Nennwert des Rails (2) um maximal 10 % ändert, wobei der konstante Raildruck-Sollwert und der Nennwert des Rails (2) einem Raildruck entspricht, der eine ausreichende Kraftstoffversorgung im Betriebsfall des maximalen Kraftstoffbedarfs der Verbrennungskraftmaschine sicherstellt, und dass im Teillastbetrieb der Verbrennungskraftmaschine wenigstens ein Zylinder aktiv abgeschaltet wird.

2. Verfahren nach Anspruch 1, **dadurch gekennzeichnet, dass** eine dynamische Zylinderabschaltung mit einer gleichbleibenden oder variierenden Anzahl gleichzeitig deaktivierter Zylinder ausgeführt wird, wobei die Anzahl zu deaktivierender Zylinder vorzugsweise in Abhängigkeit der aktuellen Motorlast bestimmt wird.

3. Verfahren nach einem der vorhergehenden Ansprüche, **dadurch gekennzeichnet, dass** die Anzahl deaktivierter Zylinder in aufeinanderfolgenden Arbeitsspielen der Verbrennungskraftmaschine alternierend geändert wird.

4. Verfahren nach einem der vorstehenden Ansprüche, **dadurch gekennzeichnet, dass** sich der variable Sollwert innerhalb einer Bandbreite B in Bezug auf den Nennwert des Rails (2) der Verbrennungskraftmaschine um maximal 5 % ändert.

5. Verfahren nach einem der vorstehenden Ansprüche, **dadurch gekennzeichnet, dass** die Kraftstoffzuführung in die Brennräume über eine Saugrohreinspritzung erfolgt und der konstante bzw. dauerhaft annähernd konstante Raildruck-Sollwert bevorzugt in einer Grössenordnung zwischen 8 bar und 25 bar liegt, besonders bevorzugt zwischen 10 bar und 20 bar und idealerweise zwischen 12 bar und 18 bar.

6. Verfahren nach Anspruch 5, **dadurch gekennzeichnet, dass** das effektive Railvolumen im Verhältnis zum Gesamthubraum der Verbrennungskraftmaschine bevorzugt zwischen 4 % bis 40 %, besonders bevorzugt zwischen 4 % bis 25 % und idealerweise zwischen 8 % bis 25 % liegt.

7. Verfahren nach einem der vorstehenden Ansprüche 1 bis 4, **dadurch gekennzeichnet, dass** die Kraftstoffzuführung in die Brennräume über eine Direkteinspritzung erfolgt.

8. Verfahren nach Anspruch 7, **dadurch gekennzeichnet, dass** eine Niederdruck-Direkteinspritzung erfolgt und der konstante bzw. dauerhaft annähernd konstante Raildruck-Sollwert in einer Grössenordnung zwischen 8 bar und 25 bar liegt, besonders bevorzugt zwischen 10 bar und 20 bar liegt und idealerweise zwischen 12 bar und 18 bar liegt.

9. Verfahren nach Anspruch 7, **dadurch gekennzeichnet, dass** eine Hochdruck-Direkteinspritzung erfolgt und der konstante bzw. dauerhaft annähernd konstante Raildruck-Sollwert in einer Grössenordnung zwischen 150 bar und 500 bar liegt, besonders bevorzugt zwischen 200 bar und 400 bar liegt und idealerweise zwischen 200 bar und 350 bar liegt.

10. Verfahren nach einem der Ansprüche 7 bis 9, **dadurch gekennzeichnet, dass** das effektive Railvolumen im Verhältnis zum Gesamthubraum der Verbrennungskraftmaschine bevorzugt im Bereich zwischen 1 % bis 32 %, besonders bevorzugt zwischen 2 % bis 16 % und idealerweise zwischen 2 % bis 8 % liegt.

11. Verfahren nach einem der vorhergehenden Ansprüche, **dadurch gekennzeichnet, dass** die Gaswechselventile eines deaktivierten Zylinders anders betrieben werden können als im Fall seiner Aktivhaltung und dabei die Gaswechselventile eines deaktivierten Zylinders vorzugsweise komplett verschlossen bleiben.

12. Verfahren nach einem der vorhergehenden Ansprüche, dass die für die jeweiligen Haupteinspritzungen bestehenden Öffnungszeiten der Injektoren (1) nicht in Abhängigkeit der Motorlast verändert wird.

13. Verfahren nach einem der vorstehenden Ansprüche, **dadurch gekennzeichnet, dass** die Raildruckpumpe (6) zur Aufladung des Rails (2) mit Kraftstoff getaktet betrieben wird, wobei jene Taktung der Raildruckpumpe (6) insbesondere auf solche Zeiträume synchronisiert wird, innerhalb derer eine Einspritzung von Kraftstoff in die aktiven Zylinder der Brennkraftmaschine ansteht.

14. Verfahren nach einem der vorstehenden Ansprüche, **dadurch gekennzeichnet, dass** der gasförmige Kraftstoff Wasserstoff oder Erdgas ist bzw. Wasserstoff in Molekularform oder Erdgas enthält.

15. Gasmotor mit mindestens zwei Zylindern und einem System zur Kraftstoff-Einspritzung, bei dem der Kraftstoff aus einem Primärtank entnommen werden kann und unter einer gegenüber dem atmosphärischen Druck deutlich verdichteten Form mindestens einem Rail (2) zuführbar ist und mehreren Zylindern der gasförmige Kraftstoff aus einem gemeinsam genutzten Rail (2) zuführbar ist, wobei die Verbrennungskraftmaschine eine Motorsteuerung (3) aufweist, die konfiguriert ist, das Verfahren gemäß einem der vorstehenden Ansprüche auszuführen.

## Claims

1. Method for operating an internal combustion engine with at least two cylinders and a fuel injection system, in which the fuel is withdrawn from a primary tank and is supplied in a compressed form relative to atmospheric pressure to at least one rail (2), and a plurality of cylinders draw the gaseous fuel from a commonly used rail (2),
**characterized in that** the rail pressure of the gaseous fuel stored in the rail (2) is maintained during operation of the internal combustion engine, independently of the operating point of the engine, at a constant rail pressure target value or at a variable rail pressure target value, wherein the variable rail pressure target value varies by at most 10% relative to a nominal value of the rail (2) within a bandwidth B, wherein the constant rail pressure target value and the nominal value of the rail (2) correspond to a rail pressure which ensures sufficient fuel supply in the case of operation at the maximum fuel demand of the internal combustion engine, and **in that** at least one cylinder is actively deactivated during partial-load operation of the internal combustion engine.

2. Method according to claim 1, **characterized in that** a dynamic deactivation of cylinders is performed with a constant or variable number of cylinders simultaneously deactivated, the number of cylinders to be deactivated being preferably determined as a function of the current load of the engine.

3. Method according to any one of the preceding claims, **characterized in that** the number of deactivated cylinders is alternated in successive working cycles of the internal combustion engine.

4. Method according to any one of the preceding claims, **characterized in that** the variable target value varies by at most 5% relative to the nominal value of the rail (2) of the internal combustion engine within a bandwidth B.

5. Method according to any one of the preceding claims, **characterized in that** the supply of fuel into the combustion chambers takes place by means of port injection and the constant or lastingly approximately constant rail pressure target value is preferably in an order of magnitude between 8 bar and 25 bar, particularly preferably between 10 bar and 20 bar, and ideally between 12 bar and 18 bar.

6. Method according to claim 5, **characterized in that** the effective rail volume relative to the total displacement of the internal combustion engine is preferably between 4% and 40%, particularly preferably between 4% and 25%, and ideally between 8% and 25%.

7. Method according to any one of the preceding claims 1 to 4, **characterized in that** the supply of fuel into the combustion chambers takes place by means of direct injection.

8. Method according to claim 7, **characterized in that** a low-pressure direct injection is carried out and the constant or lastingly approximately constant rail pressure target value is in an order of magnitude between 8 bar and 25 bar, particularly preferably between 10 bar and 20 bar, and ideally between 12 bar and 18 bar.

9. Method according to claim 7, **characterized in that** a high-pressure direct injection is carried out and the constant or lastingly approximately constant rail pressure target value is between 150 bar and 500 bar, particularly preferably between 200 bar and 400 bar, and ideally between 200 bar and 350 bar.

10. Method according to any one of claims 7 to 9, **characterized in that** the effective rail volume relative to the total displacement of the internal combustion engine is preferably in the range between 1% and 32%, particularly preferably between 2% and 16%, and ideally between 2% and 8%.

11. Method according to any one of the preceding claims, **characterized in that** the gas exchange valves of a deactivated cylinder can operate differently than in the case of its activation, and the gas exchange valves of a deactivated cylinder preferably remain completely closed.

12. Method according to any one of the preceding claims, **characterized in that** the opening times of the existing injectors (1) for the respective main injections are not modified as a function of the engine load.

13. Method according to any one of the preceding claims, **characterized in that** the rail pressure pump (6) intended for charging the rail (2) with fuel is operated in a clocked manner, the clock rate of the rail pressure pump (6) being in particular synchronized with the time periods during which a fuel injection into the active cylinders of the internal combustion engine is scheduled.

14. Method according to any one of the preceding claims, **characterized in that** the gaseous fuel is hydrogen or natural gas, or contains hydrogen in molecular form or natural gas.

15. Gas engine with at least two cylinders and a fuel injection system, in which the fuel can be withdrawn from a primary tank and can be supplied in a form significantly compressed relative to atmospheric pressure to at least one rail (2), and the gaseous fuel can be supplied to a plurality of cylinders from a commonly used rail (2), the internal combustion engine comprising an engine controller (3) which is configured to execute the method according to any one of the preceding claims.

## Revendications

1. Procédé pour faire fonctionner un moteur à combustion interne avec au moins deux cylindres et un système d'injection de carburant, dans lequel le carburant est prélevé d'un réservoir primaire et est acheminé sous une forme comprimée par rapport à la pression atmosphérique vers au moins une rampe (2) et plusieurs cylindres soutirent le carburant gazeux d'une rampe (2) utilisée de manière commune,
caractérisé en que
la pression de rampe du carburant gazeux stocké dans la rampe (2) est maintenue pendant le fonctionnement du moteur à combustion interne, indépendamment du point de fonctionnement du moteur, à une valeur de consigne de pression de rampe constante ou à une valeur de consigne de pression de rampe variable, la valeur de consigne de pression de rampe variable ne variant qu'au maximum de 10 % par rapport à une valeur nominale de la rampe (2) dans une largeur de bande B, la valeur de consigne de pression de rampe constante et la valeur nominale de la rampe (2) correspondant à une pression de rampe qui garantit une alimentation en carburant suffisante en cas de fonctionnement à la demande maximale en carburant du moteur à combustion interne, et en ce qu'au moins un cylindre est désactivé activement en fonctionnement à charge partielle du moteur à combustion interne.

2. Procédé selon la revendication 1, **caractérisé en ce qu'**une désactivation dynamique des cylindres est effectuée avec un nombre constant ou variable de cylindres désactivés simultanément, le nombre de cylindres à désactiver étant déterminé de préférence en fonction de la charge actuelle du moteur.

3. Procédé selon l'une quelconque des revendications précédentes, **caractérisé en ce que** le nombre de cylindres désactivés est modifié en alternance dans des cycles de travail successifs du moteur à combustion interne.

4. Procédé selon l'une quelconque des revendications précédentes, **caractérisé en ce que** la valeur de consigne variable varie au maximum de 5 % par rapport à la valeur nominale de la rampe (2) du moteur à combustion interne à l'intérieur une largeur de bande B.

5. Procédé selon l'une quelconque des revendications précédentes, **caractérisé en ce que** l'alimentation en carburant dans les chambres de combustion s'effectue par l'intermédiaire d'une injection dans le tuyau d'aspiration et la valeur de consigne de pression de rampe constante ou approximativement constante de manière durable se situe de préférence dans un ordre de grandeur compris entre 8 bars et 25 bars, de manière particulièrement préférée entre 10 bars et 20 bars et idéalement entre 12 bars et 18 bars.

6. Procédé selon la revendication 5, **caractérisé en ce que** le volume de rampe effectif par rapport à la cylindrée totale du moteur à combustion interne est de préférence compris entre 4 % et 40 %, de manière particulièrement préférée entre 4 % et 25 % et idéalement entre 8 % et 25 %.

7. Procédé selon l'une quelconque des revendications 1 à 4 précédentes, **caractérisé en ce que** l'alimentation en carburant dans les chambres de combustion s'effectue par l'intermédiaire d'une injection directe.

8. Procédé selon la revendication 7, **caractérisé en ce qu'**une injection directe à basse pression est effectuée et la valeur de consigne de pression de rampe constante ou approximativement constante de manière durable se situe dans un ordre de grandeur compris entre 8 bars et 25 bars, de manière particulièrement préférée entre 10 bars et 20 bars et idéalement entre 12 bars et 18 bars.

9. Procédé selon la revendication 7, **caractérisé en ce qu'**une injection directe à haute pression est effectuée et la valeur de consigne de pression de rampe constante ou approximativement constante de manière durable est comprise entre 150 bars et 500 bars, de manière particulièrement préférée entre 200 bars et 400 bars et idéalement entre 200 bars et 350 bars.

10. Procédé selon l'une quelconque des revendications 7 à 9, **caractérisé en ce que** le volume de rampe effectif par rapport à la cylindrée totale du moteur à combustion interne se situe de préférence dans la plage comprise entre 1 % et 32 %, de manière particulièrement préférée entre 2 % et 16 % et idéalement entre 2 % et 8 %.

11. Procédé selon l'une quelconque des revendications précédentes, **caractérisé en ce que** les soupapes d'échange de gaz d'un cylindre désactivé peuvent fonctionner différemment que dans le cas de son activation, et les soupapes d'échange de gaz d'un cylindre désactivé restent de préférence complètement fermées.

12. Procédé selon l'une quelconque des revendications précédentes, **caractérisé en ce que** les temps d'ouverture des injecteurs (1) existants pour les injections principales respectives ne sont pas modifiés en fonction de la charge du moteur.

13. Procédé selon l'une quelconque des revendications précédentes, **caractérisé en ce que** la pompe de pression de rampe (6) destinée à charger la rampe (2) en carburant fonctionne de manière cadencée, cette cadence de la pompe de pression de rampe (6) étant notamment synchronisée sur les périodes pendant lesquelles une injection de carburant dans les cylindres actifs du moteur à combustion interne est prévue.

14. Procédé selon l'une quelconque des revendications précédentes, **caractérisé en ce que** le carburant gazeux est de l'hydrogène ou du gaz naturel ou contient de l'hydrogène sous forme moléculaire ou du gaz naturel.

15. Moteur à gaz avec au moins deux cylindres et un système d'injection de carburant, dans lequel le carburant peut être prélevé d'un réservoir primaire et peut être acheminé sous une forme nettement comprimée par rapport à la pression atmosphérique vers au moins une rampe (2) et le carburant gazeux peut être acheminé vers plusieurs cylindres à partir d'une rampe utilisée de manière commune (2), le moteur à combustion interne présentant une commande de moteur (3) qui est configurée pour exécuter le procédé selon l'une quelconque des revendications précédentes.
